# EUROPEAN PATENT APPLICATION

(11) **EP 3 291 146 A1**
(43) Date of publication of application: **07.03.2018**
(21) Application number: 17165661.4
(22) Date of filing: 10.04.2017
(51) Int. Cl.: G06N 3/04, G06N 5/04

(54) **KNOWLEDGE EXTRACTION FROM A CONVOLUTIONAL NEURAL NETWORK**

(30) Priority: 05.09.2016 DE 102016216756
(71) Applicant: FUJITSU LIMITED, Kawasaki-shi, Kanagawa 211-8588 (JP)
(72) Inventor: TOWNSEND, Joseph, High Wycombe, Buckinghamshire HP15 7AX (GB)
(74) Representative: Fenlon, Christine Lesley

(57) **Abstract**

After input data has been classified by a convolutional neural network - CNN -, a labelling process is carried out in respect of a convolutional filter of the CNN which contributed directly or indirectly to classification of input data. The labelling process comprises inputting an output of the convolutional filter, and/or an output of a max-pooling filter associated with the convolutional filter, into a filter classifier which employs an input data classification process to assign a label to a feature represented by the convolutional filter. The labelling process is repeated in respect of each individual convolutional filter of the CNN which contributed directly or indirectly to classification of the input data. The CNN is then translated into a neural-symbolic network in association with the assigned labels, and a knowledge extraction method is used to extract from the neural-symbolic network knowledge relating to the classification of the input data by the CNN. A summary, comprising the input data, the classification of the input data assigned by the CNN, and the extracted knowledge, may be generated and output. Alternatively, or in addition, an alert indicating that performance of an action or task, using the extracted knowledge and classified input data, is required may be generated and output

## Description

The present invention relates to knowledge extraction from a Convolutional Neural Network.

A neural network is a layered network of artificial units which map an input vector (in the input layer) to an output vector (in the output layer) according to numerical weights on edges between units. Weights are adjusted according to a training algorithm, usually back propagation. A Shallow Neural Network is a neural network with one or very few hidden layers, whereas a Deep Neural Network (DNN) is a neural network with multiple layers. A Convolutional Neural Network (CNN) is a particular type of DNN in which neurons in each layer are grouped into N-dimensional arrays (N is typically 2) to form convolutional filters (sometimes known as "kernels"), each of which detects the presence or absence of different overlapping features in the input data.

Convolutional Neural Networks (CNNs) are most commonly applied to the task of image classification. A CNN consists of an input layer, multiple convolution layers, and a number of 'fully-connected' or 'dense' layers. The number of each type of layer may vary depending on the choice of architecture. In the case of two-dimensional images, an X*Y square of neurons forming a convolutional filter corresponds to an X*Y pixel image representing the feature that filter detects. Filters in lower layers correspond to lower-level features of the input and filters in higher levels correspond to higher-level features.

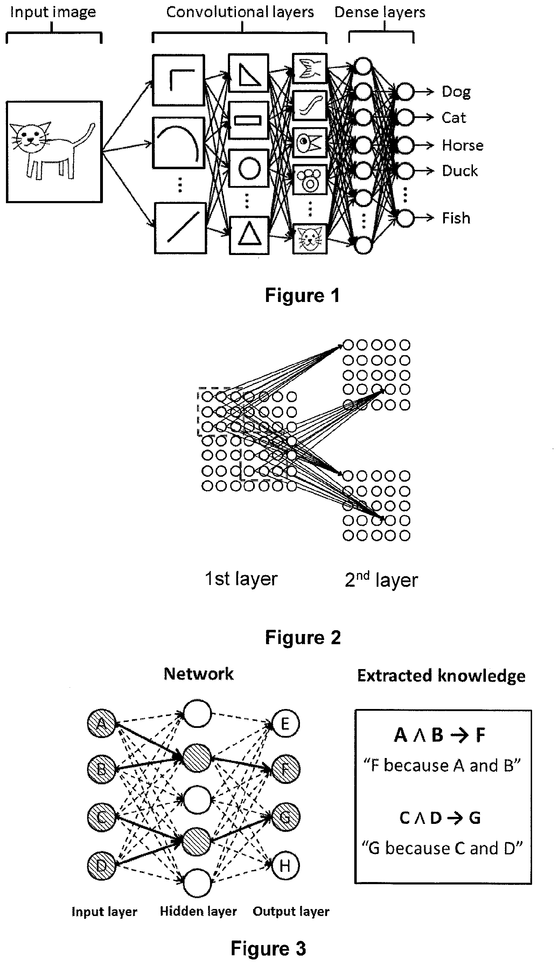

Figure 1 of the accompanying drawings is a diagram illustrating a CNN trained to recognise pictures of animals. Each convolutional filter in the convolutional layers is configured to detect the presence (or absence) of a different feature in the input image at varying levels of abstraction. For example, the first convolutional layer detects primitive lines, curves, etc.; the second layer detects the presence of primitive shapes as combinations of those lines and curves, and the third layer detects the presence of body parts of the animal as combinations of those primitive shapes. The final dense layer outputs a classification for the input image. Each line connecting filters in Figure 1 represents a group of connections connecting each neuron from one filter to each neuron from another filter. Each neuron in each filter in one layer receives input from a different subset, or 'receptive field', of neurons from filters in the previous layer. For example, in Figure 2 of the accompanying drawings, which is a diagram illustrating connections between convolutional filters, the top-left neurons in both filters in the second layer both receive input from the top-left 3x3 square of neurons in the first. Each convolutional filter may also propagate its output to an associated 'max-pooling' filter (not shown in Figure 1 or 2) en-route to the next convolutional layer. A max-pooling filter essentially summarises information in the convolution filter it receives input from and then propagates this summary on to the next layer. The max-pooling filter is smaller than the associated convolutional filter in that it contains fewer neurons.

As for the dense layers, all neurons receive input from all neurons in the previous layer and provide input to all neurons in the next. Usually the final dense layer is a 'softmax' layer, where the sum of all activations is 1 and the neuron with the highest activation corresponds to the designated class of the input image.

Connections between neurons are weighted in such a way that as features are activated in each layer, they activate the filter in the following layer which corresponds to the combination of those features. For example, activation of the triangle and circle in the second layer of Figure 1 activates both the "duck head" filter and the "cat head" filter in the third layer. The correct combination of activated filters will ultimately result in the activation of the neuron in the output layer which corresponds to the classification image. In this case, the 'cat' neuron becomes activated.

It is not easy to understand the information encoded in a trained Convolutional Neural Network, or most other neural networks, deep or otherwise. In particular, while CNNs have proven to be effective in classifying input data, especially images, they provide no means of explaining the reason behind their choice of classification. Such explanations for a classification would be useful in many applications, for example medical diagnostics. The closest researchers have so far come to understanding the behaviour of a CNN is to visualise the output of the filters. However, this is only useful to the extent that the feature represented by the filter is recognisable by the human observer. The feature might be something that some humans recognise but others don't, or perhaps it should be recognisable by most humans but is not clear from the quality of the image or other input data. Alternatively the feature might be a new concept that users of the CNN are unaware of but should be more concerned with due to its usefulness in classifying certain input data.

A Neural-Symbolic Network is a type of neural network in which individual neurons represent individual concepts with labels assigned to them. Connections between neurons represent knowledge about the relationship between those concepts. Neural-Symbolic Integration is the field of study of the relationship between neural networks and symbolic knowledge, i.e. knowledge which can be read, interpreted, and understood by a human. One goal of neural symbolic integration is knowledge extraction, i.e. the task of extracting symbolic knowledge from trained neural networks. Methods of 'knowledge extraction', i.e. the extraction of a set of rules from a standard trained neural-symbolic network such that a human can understand it and explain why that network produces the results it does, have been proposed (for example as described in H. Jacobsson, "Rule Extraction from Recurrent Neural Networks: A Taxonomy and Review", 2005; A.S. d'Avila Garcez et al., "Neural-Symbolic Learning Systems", Springer Science and Business Media, 6 December 2012; and B. Hammer et al., "Perspectives of Neural-Symbolic Integration", Springer Science and Business Media, 25 November 2010). To date such knowledge extraction methods have been effective on standard 'shallow' networks which have an input layer, one hidden layer, and one output layer. In addition, an approach to extracting knowledge from Deep Belief Networks (a type of DNN for producing probabilistic models) when applied to simple image classification has been proposed. However, no successful solution has yet been found to the problem of knowledge extraction from CNNs.

A knowledge extraction process in its simplest form is represented in Figure 3 of the accompanying drawings. Thick black lines represent weights with strong connections, dotted lines represent weights with weak connections, and hatched circles represent active neurons. Output neurons F and G are activated, but we wish to know why. The knowledge extraction process traces activation back from these neurons to identify which neurons in previous layers lead to their activation. By tracing activation, it can be seen that F is active when A and B are active, and G is active when C and D are.

In summary, whilst it is beneficial to be able to classify input data, it is also beneficial to provide an explanation of why that classification has been made, perhaps so that the user gains some reassurance that the classification is correct, or so that they gain the domain expertise to learn features of the class and make further classifications themselves, or for other reasons, such as enabling further technical processes to be carried out.

Accordingly it is desirable to provide a method and apparatus whereby explanations for classifications performed by a CNN are provided.

An embodiment of the present invention converts a CNN into a neural-symbolic network, to which existing or future knowledge extraction methods can be applied in order to understand the reasons why the CNN has classified input data as it has.

In particular, according to an embodiment of a first aspect of the present invention there is provided a method for use with a CNN used to classify input data, the method comprising: after input data has been classified by the CNN, carrying out a labelling process in respect of a convolutional filter of the CNN which contributed directly or indirectly to classification of the input data, the labelling process comprising inputting an output of the convolutional filter, and/or an output of a max-pooling filter associated with the convolutional filter, into a filter classifier which employs an input data classification process to assign a label to a feature represented by the convolutional filter; repeating the labelling process in respect of each individual convolutional filter of the CNN which contributed directly or indirectly to classification of the input data; translating the CNN into a neural-symbolic network in association with the assigned labels; and using a knowledge extraction method to extract from the neural-symbolic network knowledge relating to the classification of the input data by the CNN. The method may further comprise generating and outputting at least one of: a summary comprising the input data, the classification of the input data assigned by the CNN, and the extracted knowledge; and an alert indicating that performance of an action or task, using the extracted knowledge and classified input data, is required.

On the basis of the summary or the alert, the extracted knowledge may be used in conjunction with the classified input data to perform a task or action, for example (but not limited to) a task or action relating to at least one of: a fault detection process; a machine part classification process, a visual media classification process; and a medical diagnosis process.

As mentioned above, CNNs are composed of convolutional filters, each of which responds to a different feature that may or may not be present in the input data to be classified. The output of each filter is itself essentially an image, and hence each convolutional filter can be considered to be analogous to an individual neuron in a neural-symbolic network.

In an embodiment of the present invention, when input data is classified using a CNN, each convolutional filter (and/or max-pooling filter) in the CNN which contributes to the classification of that input data provides its output (an image) of the feature recognised by that filter) to a filter classifier (another classifier or set of classifiers), which assigns a label to that filter. Labelled filters are then mapped to individual neurons in a neural-symbolic network and the connections between those filters are mapped to connections between corresponding neurons. Knowledge extraction methods can then be applied to the constructed neural-symbolic network in order to explain the reasoning behind the choice of classification for the original input data.

According to an embodiment of a second aspect of the present invention there is provided a computer program which, when run on a computer, causes that computer to carry out a method embodying the first aspect of the present invention.

According to an embodiment of a third aspect of the present invention there is provided apparatus for use with a convolutional neural network - CNN - used to classify input data, the apparatus comprising: a filter classifier to carry out, after input data has been classified by the CNN, a labelling process in respect of a convolutional filter of the CNN which contributed directly or indirectly to classification of the input data, the labelling process comprising employing an input data classification process to assign a label to a feature represented by the convolutional filter based on an output of the convolutional filter, and/or an output of a max-pooling filer associated with the convolutional filter, wherein the filter classifier is operable to repeat the labelling process in respect of each individual convolutional filter of the CNN which contributed directly or indirectly to classification of the input data; a neural-symbolic network constructor to translate the CNN into a neural-symbolic network in association with the assigned labels; and a knowledge extractor to use a knowledge extraction method to extract from the neural-symbolic network knowledge relating to the classification of the input data by the CNN.; The apparatus may further comprise an output device to generate and output at least one of: a summary comprising the input data, the classification of the input data assigned by the CNN, and the extracted knowledge; and an alert indicating that performance of an action or task, using the extracted knowledge and classified input data, is required. On the basis of the summary or the alert, the extracted knowledge and classified input data may be used to perform a task or action, for example (but not limited) to a task or action relating to at least one of: a fault detection process; a machine part classification process, a visual media classification process; and a medical diagnosis process.

In embodiments of the present invention the labelling process may use the same filter classifier for each convolutional filter.

If the feature represented by the convolutional filter cannot be classified by the filter classifier in embodiments of the present invention, an arbitrary label may be assigned to the feature by the filter classifier. Thus, even if some key features identified by the filter classifier(s) cannot be recognised by the filter classifier(s), arbitrary labels are assigned to such features which can serve to identify concepts which could be of importance.

In embodiments of the present invention, translating the CNN into a neural-symbolic network may comprise: representing each labelled convolutional filter of the CNN in the neural-symbolic network as a single neuron associated with the label assigned to the filter; and representing connections between those convolutional filters as connections between those neurons.

Reference will now be made, by way of example, to the accompanying drawings, in which:
Figure 1 is a diagram illustrating a CNN;
Figure 2 is a diagram illustrating connections between convolutional filters;
Figure 3 is a diagram for use in explaining a knowledge extraction process;
Figure 4A is a flowchart of a process including a method embodying the present invention;
Figure 4B is a block diagram of apparatus embodying the present invention;
Figure 5 is a diagram for explaining a filter classification process;
Figure 6 is a diagram of a CNN in which all active filters have been labelled;
Figure 7 is a diagram for explaining a process of translating a labelled CNN into a neural-symbolic network;
Figure 8 is a diagram of a neural-symbolic network translated from a labelled CNN;
Figure 9 is a table for use in explaining knowledge extraction from the neural-symbolic network of Figure 8;
Figure 10 is a diagram of a labelled CNN;
Figure 11 is a diagram of a neural-symbolic network translated from the labelled CNN of Figure 10;
Figure 12 is a table for use in explaining knowledge extraction from the neural-symbolic network of Figure 11; and
Figure 13 is a block diagram of a computing device suitable for carrying out a method embodying the present invention.

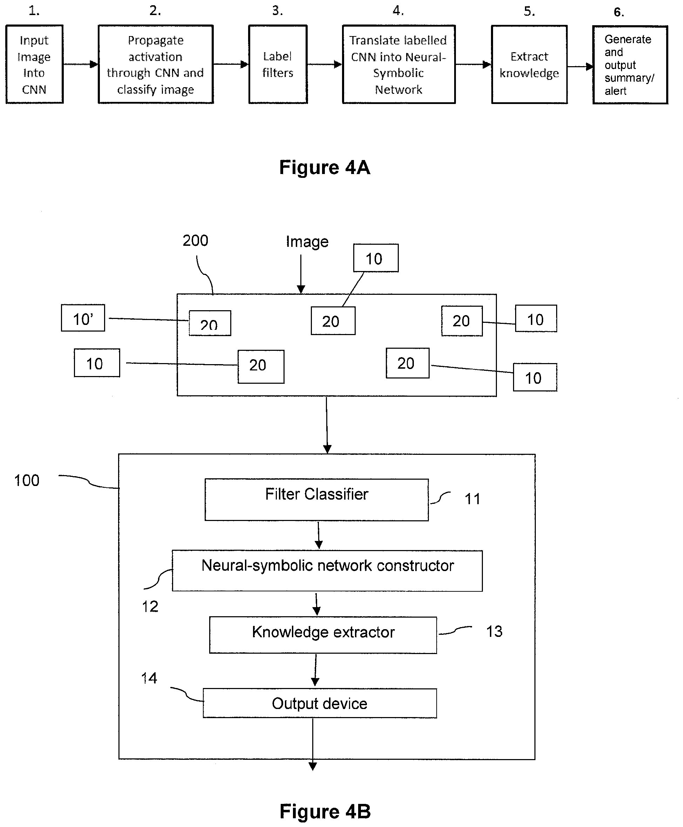

Figure 4A is a flowchart of a process including a method embodying the present invention. Input data, in the form of an image in this example, is input into the CNN (step 1), and by propagating activation through the neurons in the network, the CNN outputs a classification for the image (step 2). Then, according to an embodiment of the present invention, all active filters which contributed to the classification of the image are labelled using a filter classifier (explained below) (step 3). The network of labelled filters is then translated into a neural-symbolic network (step 4), to which existing or future knowledge extraction methods may be applied in order to produce an explanation for the classification of the image (step 5). A summary comprising the input data, the classification of the input data assigned by the CNN, and the extracted knowledge may then be generated and output. Alternatively, or in addition, an alert indicating that performance of an action or task, using the extracted knowledge and classified input data, is required may be generated and output (step 6).

Figure 4B depicts apparatus 100 embodying the present invention. The apparatus 100 comprises a filter classifier 11, a neural-symbolic network constructor 12, and a knowledge extractor 13. The filter classifier 11 is configured to carry out, after input data (in the form of an image in this example) has been classified by a CNN 200, a labelling process in respect of a convolutional filter 20 of the CNN 200 which contributed directly or indirectly to classification of the input data. The labelling process comprises employing an input data classification process to assign a label 10(10') to a feature represented by the convolutional filter 20 based on an output of the convolutional filter, and/or an output of a max-pooling filer associated with the convolutional filter. The filter classifier is operable to repeat the labelling process in respect of each individual convolutional filter 20 of the CNN 200 which contributed directly or indirectly to classification of the input data. The neural-symbolic network constructor 12 is configured to translate the CNN 200 into a neural-symbolic network 300 in association with the labels 10(10') assigned by the filter classifier 11. The knowledge extractor 13 is configured to use a knowledge extraction method to extract from the neural-symbolic network knowledge relating to the classification of the input data by the CNN. The apparatus may also comprise an output device 14 configured to output the extracted knowledge and classified input data for use in a task to be performed by a human or a computing device. The output device 14 may, for example, output to a display screen, a printer or a data storage device. The output device 14 may generate and output a summary comprising the input data, the classification assigned to the input data by the CNN, and the extracted knowledge. Alternatively, or in addition, the output device 14 may generate and output an alert indicating that performance of an action or task, using the extracted knowledge and classified input data, is required.

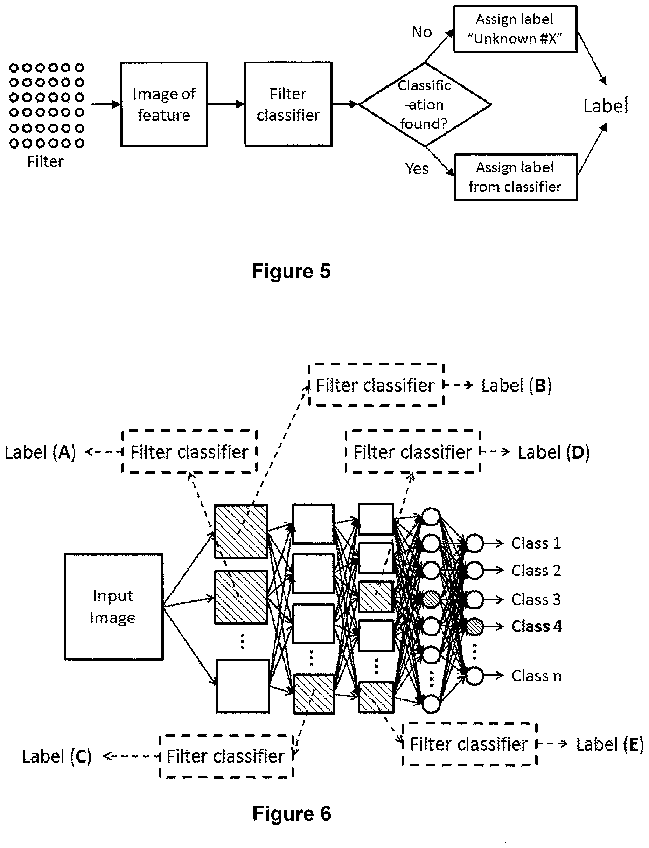

In apparatus embodying the present invention each convolutional filter 20 of a CNN 200, and/or its associated max-pooling filter (not shown) if it has one, is itself attached to a filter classifier, e.g. another image classifier, to which the corresponding filter 20 may provide input for classification. The filter classification process is illustrated in Figure 5. Under certain conditions (explained below), the output of a convolutional filter 20 (and/or its associated max-pooling filter), itself representable as an image, is fed into the filter classifier 11, which assigns a label to the feature represented by that filter 20. If the feature is unknown to the filter classifier 11, an arbitrary label 10' is assigned to that feature by the filter classifier 11. In this example the label 'Unknown #X' is assigned, where X is the number of unrecognised features so far discovered by the filter classifier 11. This arbitrary label 10' serves to identify unknown features that are nonetheless important for the classification of the input data, so that the user may assign their own label if they so choose.

Each convolutional filter 20 may be assigned its own input data classification process, or share an input data classification process with all or a subset of other convolutional filters 20 in the CNN 200. A filter classifier 11 may be another CNN or any other input data classification mechanism.

When input data is input into the CNN 200 for classification and activation propagates to the output layer, a convolutional filter 20 in the CNN 200 must satisfy the following condition in order for its output to be passed to a filter classifier 11:
- The activation of the filter 20 must contribute, directly or indirectly, to the designation of the class label. This can be measured by back-tracing activation from the most active neuron in the output layer.

It is desirable to classify only those filters 20 which contribute to the final classification of the input data, since this is beneficial for the purposes of computational cost. It is not actually necessary to restrict which filters 20 are classified in step 3 of the flowchart of Figure 4A, since knowledge extraction methods (step 5 in Figure 4) are capable of identifying which nodes in a network contribute to the final activation. However, classifying input data can be a computationally expensive process regardless of whether or not CNNs are used, and therefore it is beneficial to only classify as few as are necessary.

When a filter 20 meets the condition mentioned above, its activation is passed to the filter classifier 11 in order to classify the feature that filter 20 represents. The filter classifier 11 produces a label 10/10', which is then assigned to the corresponding filter 20. As mentioned above, if the filter classifier cannot identify the feature that the filter represents, the filter classifier will assign an arbitrary label 10' to that feature, e.g. "Unknown #X".

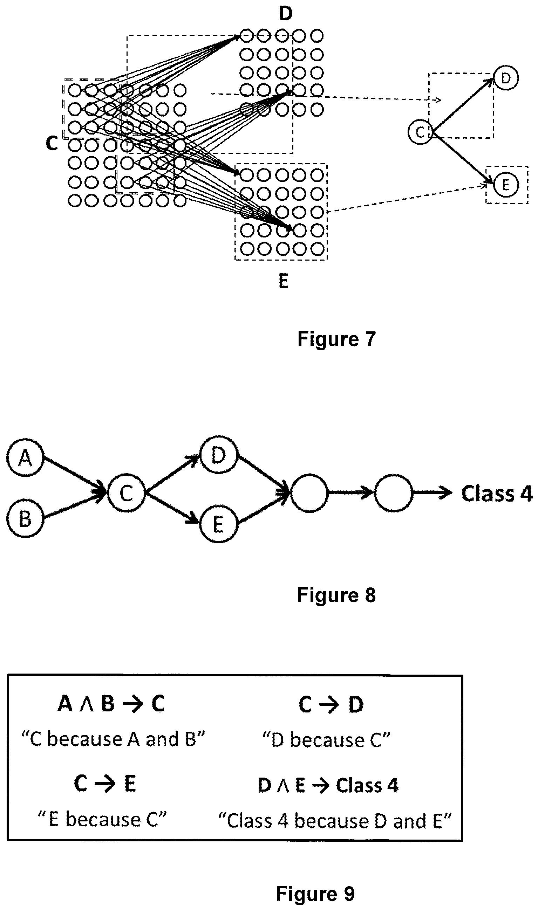

Figure 6 represents a CNN in which all active filters (represented as hatched squares) have been labelled (labels (A) to (E)) using a filter classifier. The labelled CNN can now be translated into a neural-symbolic network by representing each filter as a single neuron with the assigned label, and by representing the connections between filters as connections between those neurons. Figure 7 illustrates a process by which a labelled convolutional neural network is translated to a neural-symbolic one. Filters are translated to individual, labelled neurons, and connections between filters are mapped to individual connections between corresponding neurons. As shown in Figure 8, with labels assigned by the filter classification process, a labelled CNN is translated into a neural-symbolic network according to the process in Figure 7. Existing or future knowledge extraction methods can then be applied to this neural-symbolic translation of the CNN in order to extract rules which provide an explanation for the classification of the input data. Figure 9 provides an example of the application of a prior art knowledge extraction method, e.g. that mentioned above proposed by Jacobsson, to the neural-symbolic translation of the CNN of Figure 8 in order to understand the reasoning behind the classification of the input image.

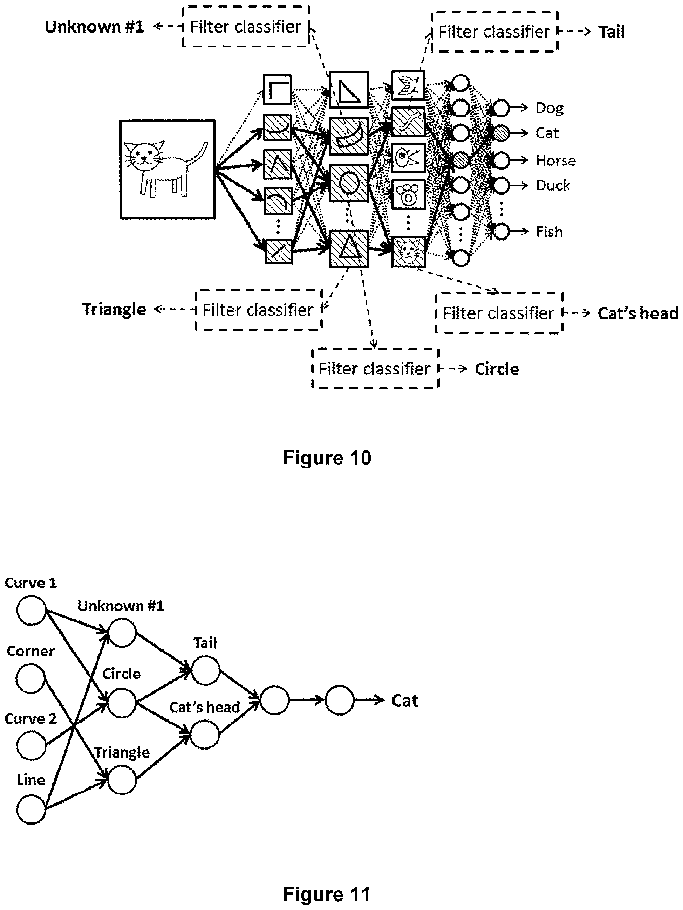

An embodiment of the invention will now be described with reference to Figure 10, using the example from Figure 1, that of classifying an image of a cat. In Figure 10, the image of a cat is input into the CNN, activation is propagated through the network and a classification of 'cat' is assigned to the image.

Next, active filters which contribute to the classification (by activating the corresponding neuron in the output layer) are labelled using the filter classification method described with reference to Figure 5. In the present example, the second shape down in the second convolutional layer is unknown to the filter classifier used to perform the classification, and is therefore assigned an arbitrary label 'Unknown #1'.

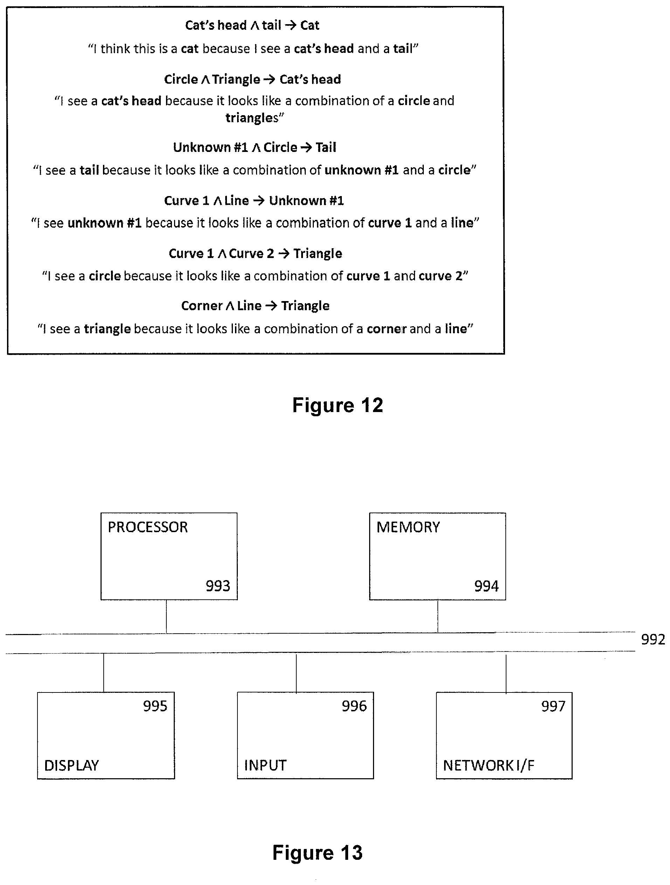

Figure 11 is a diagram of a neural-symbolic network obtained from the labelled CNN of Figure 10 by mapping labelled filters to individual neurons and connections between those filters to connections between corresponding neurons. One or more knowledge extraction methods are then used to extract rules from the neural-symbolic network which describe why the classification of 'cat' was assigned to the image input into the CNN, as shown in Figure 12.

The example given above is a very simple one, and is provided only to demonstrate the principle of the present invention. A human would easily be capable of understanding why a cat is classified as it is. However the present invention can be applied to more complex input data in more complex domains.

In embodiments of the present invention at least one of a summary (comprising the input data, the classification of the input data assigned by the CNN, and the extracted knowledge) and an alert (indicating that performance of an action or task, using the extracted knowledge and classified input data, is required) is generated and output. In some embodiments of the present invention, on the basis of the summary or the alert, the knowledge extracted from the neural-symbolic network may be used in conjunction with the classified input data to perform a task or action. The task or action may be performed by a device or by a human.

For example, an embodiment of the present invention could be applied in the area of fault detection, for example where a photograph of a machine part is presented to the CNN, and the CNN outputs a 'yes' or 'no' answer as to whether that part is safe for operation. When a fault in the input image is detected, an alert may be issued indicating that assessment of the fault is required. If the part is deemed unsafe, it is useful to know why, so that appropriate repairs can be made or so that the same fault can be quickly located in other parts of the same model. Alternatively, if the part is classified as 'safe', it is good for validation to observe the reasoning behind this classification. Where a part is deemed unsafe, the extracted knowledge and classified input data may be output to a device for determining what repairs are required to the part and/or for causing the required repairs to be carried out, and/or to a device for identifying similar parts which should be checked for the same fault.

Another area in which an embodiment of the present invention could be applied is the problem of machine part classification, if for example parts need to be catalogued. It may be that the part could be a member of one of two very similar classes, X and Y. If an image of the part is presented to the CNN and is assigned to class X, the user may be reluctant to simply accept the classification and wish to question "why X but not Y?". By examining extracted rules, the reasoning would become clear.

Another possible application of an embodiment of the present invention relates to a proposed approach to classifying film and video into different genres in which all frames from the video are rearranged into a single-image mosaic, which is then classified using a CNN. As the genre of a film may be subjective, a user may wish to question the judgement of the CNN classifier, and by viewing the reasoning behind the classification this may be possible.

Another field of application of the present invention would be medical diagnostics. Research into the medical application of Deep Learning methods is widespread, for example in detecting signs of cancer. However trained Deep Neural Networks can only suggest a likely diagnosis, but not an explanation of what features in the image lead to that diagnosis. This invention can provide a solution to this problem, in the form of rules extracted from a labelled CNN. Thus, a likely diagnosis suggested by a CNN based on an image of a body part or physical condition, could advantageously be accompanied by an explanation of why that diagnosis has been suggested, to aid the clinician in understanding the suggested diagnosis and assist the clinician in making the correct diagnosis.

Although embodiments described above have been discussed with reference to image classification, an embodiment of the present invention can also be applied to any problem other than image classification which can be translated to an image classification problem, or to any other problem which may be solved using a convolutional neural network (for example, time-series analysis using a 1-dimensional CNN).

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

Figure 13 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 13 may be used to implement all the steps of the method illustrated in Figures 4A, and perform all the tasks of the apparatus shown in Figure 4B, or only to implement some of the steps in the method of Figure 4A, and only to perform some of the tasks of the apparatus in Figure 4B.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 4A, 5, 7 and/or 10 and defined in the claims and/or to implement the filter classifier 11, neural-symbolic network constructor 12, knowledge extractor 13 and/or output device 14 of apparatus 100 described with reference to Figure 4B and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 13. Such a computing device need not have every component illustrated in Figure 13, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A method for use with a convolutional neural network - CNN - used to classify input data, the method comprising:
after input data has been classified by the CNN, carrying out a labelling process in respect of a convolutional filter of the CNN which contributed to classification of the input data, the labelling process comprising inputting an output of the convolutional filter, and/or an output of a max-pooling filter associated with the convolutional filter, into a filter classifier which employs an input data classification process to assign a label to a feature of the input data represented by the convolutional filter;
repeating the labelling process in respect of each individual convolutional filter of the CNN which contributed to classification of the input data;
translating the CNN into a neural-symbolic network in association with the assigned labels;
using a knowledge extraction method to extract from the neural-symbolic network knowledge relating to the classification of the input data by the CNN; and
generating and outputting at least one of: a summary comprising the input data, the classification of the input data assigned by the CNN, and the extracted knowledge; and an alert indicating that performance of an action or task, using the extracted knowledge and classified input data, is required.

2. A method as claimed in claim 1, further comprising, on the basis of the summary or the alert, using the extracted knowledge in conjunction with the classified input data to perform a task or action.

3. A method as claimed in claim 2, wherein the task or action is performed in relation to at least one of: a fault detection process; a machine part classification process, a visual media classification process; and a medical diagnosis process.

4. A method as claimed in any preceding claim, wherein the labelling process uses the same filter classifier for each convolutional filter.

5. A method as claimed in any preceding claim, wherein, if the feature represented by the convolutional filter cannot be classified by the filter classifier, an arbitrary label is assigned to the feature of the input data by the filter classifier.

6. A method as claimed in any preceding claim, wherein translating the CNN into a neural-symbolic network comprises:
representing each labelled convolutional filter of the CNN in the neural-symbolic network as a single neuron associated with the label assigned to the filter; and
representing connections between those convolutional filters as connections between those neurons.

7. A computer program which, when run on a computer, causes that computer to carry out the method of any one of claims 1 to 6.

8. Apparatus for use with a convolutional neural network - CNN - used to classify input data, the apparatus comprising:
a filter classifier to carry out, after input data has been classified by the CNN, a labelling process in respect of a convolutional filter of the CNN which contributed to classification of the input data, the labelling process comprising employing an input data classification process to assign a label to a feature of the input data represented by the convolutional filter based on an output of the convolutional filter, and/or an output of a max-pooling filer associated with the convolutional filter, wherein the filter classifier is operable to repeat the labelling process in respect of each individual convolutional filter of the CNN which contributed to classification of the input data;
a neural-symbolic network constructor to translate the CNN into a neural-symbolic network in association with the assigned labels;
a knowledge extractor to use a knowledge extraction method to extract from the neural-symbolic network knowledge relating to the classification of the input data by the CNN; and
an output device to generate and output at least one of: a summary comprising the input data, the classification of the input data assigned by the CNN, and the extracted knowledge; and an alert indicating that performance of an action or task, using the extracted knowledge and classified input data, is required.

9. Apparatus as claimed in claim 8, wherein the filter classifier is operable to use the same input data classification process for each convolutional filter.

10. Apparatus as claimed in claims 8 or 9, wherein, if the feature represented by the convolutional filter cannot be classified by the filter classifier, the filter classifier is operable to assign an arbitrary label to the feature of the input data.

11. Apparatus as claimed in any one of claims 8 to 10, wherein the neural-symbolic network constructor is operable to:
represent each labelled convolutional filter of the CNN in the neural-symbolic network as a single neuron associated with the label assigned to the filter; and
represent connections between those convolutional filters as connections between those neurons.
